# EUROPEAN PATENT APPLICATION

(11) **EP 1 962 453 A1**
(43) Date of publication of application: **27.08.2008**
(21) Application number: 07003925.0
(22) Date of filing: 26.02.2007
(51) Int. Cl.: H04L 12/28

(54) **Method for enabling network node redundancy in an access network, messages and nodes**

(71) Applicant: Siemens Networks GmbH & Co. KG, 81541 München (DE)
(72) Inventor: The designation of the inventor has not yet been filed
(74) Representative: Maier, Daniel Oliver

(57) **Abstract**

Described is a method for enabling redundancy in an access network, comprising:
- creating a first connection (40, 40a) between a first node (EN1) and a second node (RG1),
- between the first node and a third node (EN2) synchronize data that describes the first connection (40, 40a) by enabling a third node (EN2) to access connection data that describes the first connection after total or partial failure of the first node (EN1).

## Description

The invention relates to a method for enabling network node redundancy. The method comprises:
- creating a first connection between a first node and a second node,

The first node may be an edge node. Edge nodes represent mediation points between the access/regional network and the service network and are responsible for the first connection management and operation. The BRAS (Broadband Remote Access Server) is a typical example of an edge node.

Examples for the second node are:
- any node with a network interface requiring IP connectivity
- a single computer, i.e. an end node, or.
- a gateway.

The access network enables the access of a plurality, for instance more than 1000, of subscribers or users to a network, for instance to the Internet. The access network may use the Ethernet technology, for instance according to IEEE (Institute of Electrical and Electronics Engineers) 802.3. Other access network technologies are possible as well, especially other packet or cell technologies. An example for a cell based technology is ATM (Asynchronous Transfer Mode)

A data packet or a cell may include a header and payload data and/or a trailer. The header may include a destination address and a source address. The payload data may include control protocol data or user data, for instance speech data, video data, etc.

The connection may be established, for instance, on layer two and/or layer three according to the OSI (Open System Interconnect) model between the first node and the second node. The connection may have a connection identifier that may be also called a session identifier and other parameters that are negotiated between the first node and the second node while connection establishing or before the creation of the connection.

It is an object of the invention to provide a simple method for enabling node redundancy in an access network while considering also connections, especially connections of a point to point protocol. Furthermore, related messages and nodes should be given.

This object is solved by a method according to claim 1. Embodiments are given in the dependent claims.

Additionally to the steps mentioned at the beginning, the method comprises:
- connection data synchronization between the first node and a third node (EN2) wherein the connection data describes or only identifies the first connection (40, 40a). The synchronization enables the third node (EN2) to access connection data that describes the first connection. The access is enabled especially after total or partial failure of the first node (EN1).

The third node may be a backup node for the first node or a redundancy node for the first node. Connectivity redundancy across groups of network nodes may be feasible with other solutions, in what concerns the perspective of the network node itself; however, if, for instance, a point-to-point connection between the first node and the second node is considered, then there is currently no solution available to ensure connectivity redundancy. In case the first node fails, from the second node perspective the point-to-point connection still seems to be up (alive), but in fact the third node that took over the operations of the first node, does not know about it, if it does not store enough session information to rebuild the session. Therefore such an access is enabled by an embodiment of the invention.

Especially, the failure leads to an interruption of the connection. Therefore, at least enough data is synchronized or stored to allow the third node to fulfill the functions of the first node with regards to the same connections or with regards to connections with similar characteristics compared to the first connection.

In an embodiment the third node may store the connection data that describes the first connection. Storing of data enables easy synchronization. Storing the connection data in the third node enables immediately access to this data without using external queries if the access is needed.

In a further embodiment there may be the step of:
- enabling the second node to quickly react after the failure and create a second connection between the second node and the third node. The second connection may have the same connection identifier as the first connection. The connection identifier is also called a session identifier. By using the same identifier it is not necessary for the second device to request a new connection identifier.

Alternatively, in an embodiment of the invention there may be the step:
- using the stored connection data to notify the second node that the first connection has been interrupted because of the failure.
   Thus, it is possible to terminate the first connection in an easy and very fast way.

After the termination of the first connection a second connection may be created between the second node and the third node device after the failure. This enables the second node to further access to the network.

In an embodiment the connection data may be transferred from the first node to the third node. The connection data may be a second connection data that is a copy of a first connection data that is stored in the first node. Preferably the first connection data is copied more than once.

In another embodiment the first connection data may be copied periodically for transfer to the third node. The period time is for instance between 1 seconds and 30 seconds, preferably less than 15 seconds.

In a next embodiment the access is enabled precautionary, i.e. without knowing if the data will be needed in the third node. In most cases the data is deleted without using it by the third node. The stored data is only used when the first node fails to support the first connection.

In an embodiment the first connection may use an unchanged interface that can be used also by the third node. The unchanged interface is also called a virtual interface, for instance a virtual IP address and/or virtual MAC address.

The data describing the connection may be different from an address data. The data describing the connection may be a connection identifier, for instance.

The connection may be established using the PPPoE (Point to Point Protocol over Ethernet) protocol. The PPPoE is specified in RFC 2516. Alternatively a comparable protocol may by used, for instance PPPoA (Point to Point Protocol over ATM) as defined in RFC 2364.

In an embodiment, the PPP information is sent encapsulated by means of the packets belonging to the protocol layer of the connection. The PPP is suitable for many applications, for instance, for connections via telephone lines, especially using for instance ADSL (Asymmetric Digital Subscriber Line) or VDSL (Very high speed Digital Subscriber Line). The PPP is defined in RFC (Request For Comment) 1661.

The session may be established via an Ethernet. The Ethernet is, for instance, an Ethernet according to IEEE 802.3. Furthermore, the Ethernet may work according to a specification of one or more firms. Ethernets are available for a very broad spectrum of data rates ranging from low to high, for instance equal or greater than 1 Gigabyte/second. Therefore, Ethernet networks may be used as access networks in a cost efficient manner.

According to an embodiment of the invention, a new message is used between the first node and the third node. The new message (first message) comprises at least one data field for data describing the connection. This makes it possible for the third node to recognize a connection previously established between the first and the second node after the failure of the first node, i.e. the first node cannot support the first connection any more. It is for instance possible for the second node to terminate the session in a predetermined way or to enable further usage of this session.
The first message may be an external message, i.e. a message that is sent, for instance, between two nodes of the access network.

The first message may be based on an existing message format and contains an additional field of variable length used to transmit information related to one or more sessions. This may include an identifier, e.g., an integer.

The first message may comprise data fields describing more than one session. More than one first message may be necessary to be sent in order to provide full redundancy concerning the connections between the first node and the third node.

The third node may receive a second message according to an router redundancy protocol. The second message may comprise:
- a second identifier identifying a unit that is used as an unchanged interface for the user node if the first node fails. The second node or host does not know which node is actually handling the packets that are sent by the second node to the unchanged interface. The second message may, for instance, comprise a priority value that allows the determination of the backup node among the nodes. The second message may be standardized by a standard or a "de facto" standard, see for instance RFC 3768 (Virtual Router Redundancy Protocol), RFC 2281 (Hot Standby Router Protocol), Common Address Redundancy Protocol (CARP), etc.

The first message may comprise a second identifier (VRID) that is identical to the second identifier in the second message, i.e. has the same value. The second identifier identifies devices that are appropriate for synchronization. In an embodiment also the first message fulfills a router redundancy protocol as far as possible. Thus only small changes of that protocol and of the implementations thereof are necessary.

The third node may be able to use the data describing the connection in a third message that is sent from the third node to the second node. In the rare case of changing the active node, the connection data is used for the further processing of the connection. The typical case is that the connection data is stored in at least the third node only for backup reasons. More than one backup node may of course be used. If there is no failure of the first node during the session, the connection data may be deleted after the end of the session, without using it in the third node.

The third message may be a message that terminates the connection completely without changing standardized messages. The third message may be sent by the third node to the second node in order to terminate the connection previously established with the first node and to allow the second node to establish, if desired, a new connection to the third node. The third message may contain information concerning the type of connection to be re-established, as well as information concerning the second node identification.

The third message may be a PADT message according to the PPPoE. Therefore, no modification of a well established protocol is necessary. This is also true if other PPP protocols are used. In fact, only small implementation changes of the protocol state machines may be necessary as described below in more detail.

The third message may be a message sent by the third node to the second node containing a connection identifier and the identifier of the second node, e.g., a MAC address. The second node may use the information transmitted in the third message to request a connection to the third node by using standard methods.

The third message may be a PADO message according to the PPPoE with a modification in such a way that the session ID of the PPPoE session is transmitted in the session ID field. Therefore, only a slight modification of a well established protocol message is necessary. Usually the PADO message contains the value zero in the session field. Furthermore, only small implementation changes of the protocol state machines may be necessary as described below in more detail.

The second node may check the session identifier transmitted in the third message against the session data stored in its memory and may confirm that an access concentrator identifier or tag transmitted is equal to the one stored in association with the session data identified by the session identifier. These steps allows the third node to detect and to prevent malicious attacks. Again only slight modifications are necessary in the implementation of the second node functionality.

Embodiments of the invention relate to messages. A first message may comprise at least one of or both:
- a data field describing at least one connection between a first node and a second node of an access network,
- a data field comprising a virtual node identifier.

The message is used in the embodiments of the invention. Therefore, the same technical effects are valid for the message as well as for the method.

The data field describing at least one session may comprise at least one of or all:
- a connection identifier,
- a service name,
- a node identifier, e.g., a MAC address.

Furthermore, the message may comprise data fields to correspond to a de facto standard protocol, for instance RFC 3768. Such a field may be: a version field, a type field and/ or a checksum field.

A second message is a "PPPoE active discovery terminate PADT message" (PADT), wherein the session ID is different from zero. The effect of this was described above with relation to malicious attacks.

A further embodiment of the invention relates to a node. The node may comprise a processing unit that processes or creates a message comprising at least one of or both:
- a data field describing at least one connection between a first node and a second node of an access network,
- a data field comprising an identifier identifying a unit that is used as an unchanged interface for a third node
if the first node cannot support the connection anymore, and comprises a sending unit that sends the message to a further node of the access network or comprising a corresponding receiving unit.

Therefore the same effects are also valid as stated above, for the methods.

Furthermore, a first node device is given that processes a PPPoE active discovery terminate PADT message, wherein the session ID is different form zero by checking the session ID against a session ID of a current PPPoE session.

As far as "may" is used in this application, this term shall have the meaning of an actual embodiment and/or also the technical possibility of doing so. The appending figures are for illustrative purposes only and are not intended to limit the scope of the invention. In the following some embodiments of the invention are described with reference to the figures, wherein:
- Figure 1: illustrates a generic architecture with PPP scenario,
- Figure 2: illustrates a message with session data,
- Figure 3: illustrates the message flow during a change of the active edge nodes,
- Figure 4: illustrates a first scenario of the PPPoE message flow required to establish a PPP session,
- Figure 5: illustrates a first scenario of the message flow to and from the backup edge node,
- Figure 6: illustrates a second scenario of the message flow to and from the backup edge node,
- Figure 7: illustrates a new VRRP_PPPoE message, and
- Figure 8: illustrates a new PPP session record field of the new VRRP_PPPoE message.

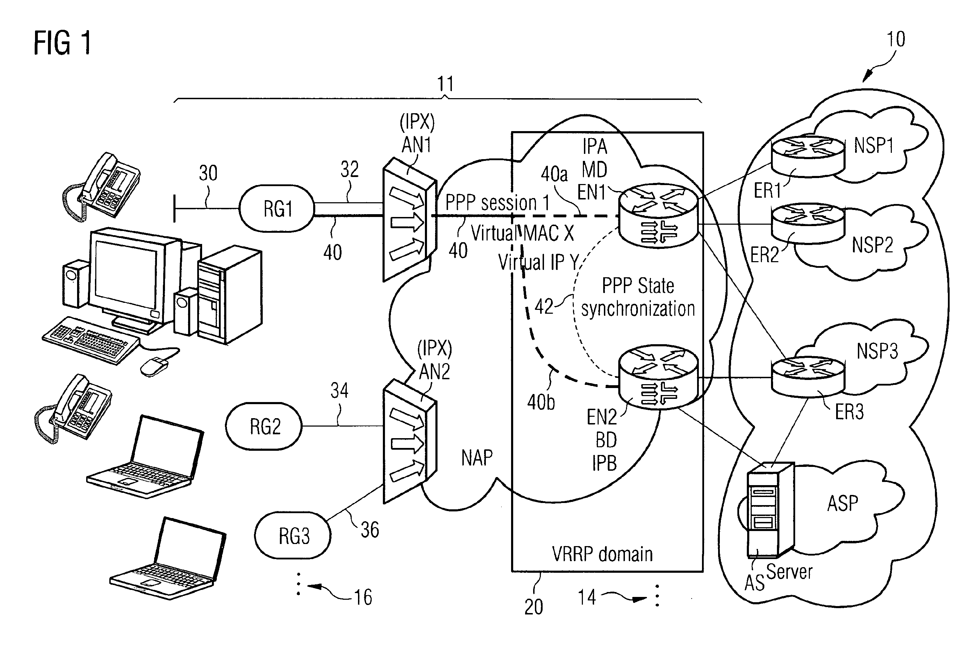

Figure 1 illustrates a generic architecture with PPP scenario in a network segment 10. Other network configurations of network segment 10 are possible as well. The network segment 10 includes, for example:
- an access network 11,
- network service provider networks NSP1 to NSP3, and
- an application provider network ASP.

The access network 11 is used between user nodes RG1 (Residential Gateway) to RG3 and 16 on one side and the networks NSP1 to NSP3, ASP on the other side. The user node RG1 is a router that is connected to a local area network 30 on the user side, for instance to an IP-based network. The network 30 connects several nodes to user node RG1, for instance a VoIP (Voice over IP) telephone and a computer. Furthermore, RG1 is connected with the help of an xDSL line 32 (x Digital subscriber line) to an access node AN1.

The user node RG2 is a single computer, for instance a notebook. The user node RG2 is connected to an xDSL line 34. The xDSL line 34 is connected to an access node AN2.

The user node RG3 is also a single computer, for instance a notebook. The user node RG3 is connected to the access node AN2 by an xDSL line 36. The xDSL lines 32 to 36 may be replaced for instance by wireless interfaces and also changing the access node AN1 correspondingly.

The access nodes AN1, AN2 are for instance layer two nodes that work on protocol layer two, i.e. the link layer. In the example an Ethernet technology is used between the access nodes AN1, AN2 and edge nodes EN1 and EN2 of the access network 11. There may be of course involved more than one back up edge nodes EN2, see dots 14, each receiving back up messages according VRRP.

The edge nodes EN1, EN2 have BRAS (Broadband Remote Access Server) functions, for example:
- PPP termination,
- authentication,
- charging.
In the example, the connection between edge nodes EN1, EN2, and EN3 to ER1, ER2, and ER3 is performed by means of an IP technology, e.g., IPv4. These functions may be provided by other nodes as well, for instance by edge router nodes ER1, ER2 and ER3 for the networks NSP1, NSP2 and NSP3 respectively. There my be also an application server AS of an application service provider ASP.

The edge nodes EN1 and EN2 and optionally further edge nodes 14 are part of a virtual router redundancy protocol (VRRP) domain 20 that provides redundancy by forming a virtual router identified by means of a virtual IP address Y and a virtual MAC address X. In the example edge node EN1 has an IP address IPA and edge node EN2 has an IP address IPB. It is supposed that edge node EN1 is the master node MD of the VRRP domain 20 at the beginning. Therefore, edge node EN1 forwards the data packets between the user nodes RG1 to RG3 and the edge router nodes ER1 to ER3 at the beginning, see lines 40, 40a. The edge node is a backup node BD at the beginning, listening to the requests performed to both the virtual IP address and the virtual MAC address, but remaining dormant.

After a failure of the edge node EN1 a VRRP election process takes place and the edge node EN2 is selected as the master node MD answering to requests for the virtual IP Y and virtual MAC X. Now node EN2 is responsible for forwarding the data packets that come from the user nodes RG1 to RG3, see lines 40, 40b.

A PPP session 40, 40a is activated between user node RG1 and virtual MAC X. At the beginning, this connection relates to a receiving unit (interface) in edge node EN1. When edge node EN1 goes down and edge node EN2 takes over, only the virtual relation to MAC X remains, there is no physical connection to a specific sending or receiving unit from edge node EN2. Therefore, user node RG1 thinks the session is activated, while in fact edge node EN2 is not aware of it and consequently, the communication in the above layers (e.g., IP layer) cannot take place. Consequently, a mechanism capable of synchronizing the session state of EN1 to EN2 is required. In order to enable the PPP session state synchronization between the two edge nodes EN1 and EN2, mechanism 42 is implemented that will be described in the following in more detail.

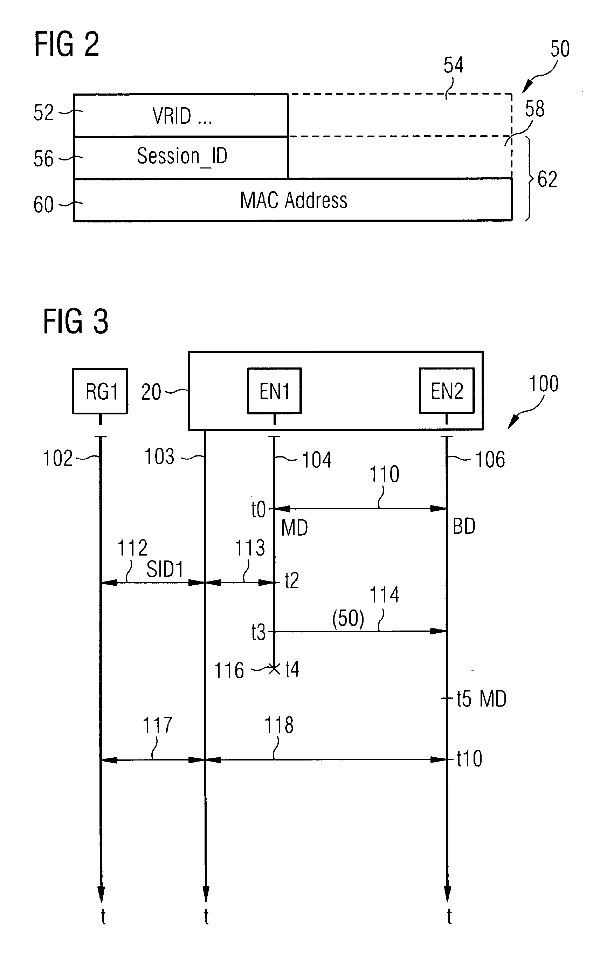

Figure 2 illustrates a message 50 with session data. The message 50 is used as part of mechanism 42. The message 50 includes:
- a data field 52 for a virtual router identifier VRID, for instance with value one (1) to identify domain 20,
- an optional data field 54,
- a data field 56 for a session identifier, in the example for session 40,
- an optional data field 58,
- a data field 60 for the MAC address of a user node, her of user node RG1.

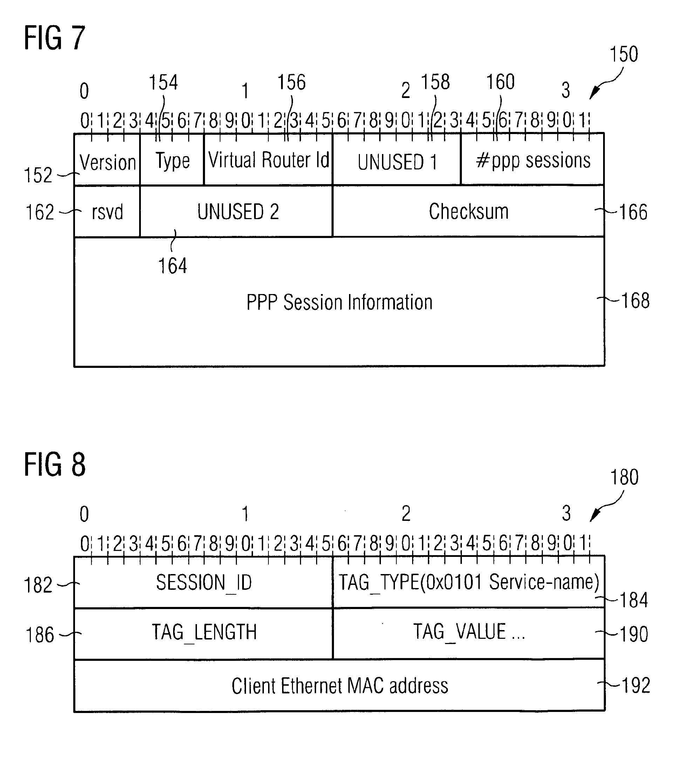

The fields 56 to 60 are session related fields 62. It is possible to transmit message 50 with the help of an extended domain 20 protocol, see Figure 7, or in another way. Message 50 is sent from edge node EN1 to edge node EN2. The session related data 62 is stored in edge node EN2 or in another node for later use. The length, the order and the kind of data fields of message 50 can be modified. There may be more or less fields 52 to 60 compared with Figure 2.

Figure 3 illustrates a message flow 100 during a change of the active edge node from EN1 to EN2. The message flow 100 will be described with reference to four time axis 102, 103, 104 and 106. Time axis 102 is for user node RG1. Time axis 103 is for virtual router 20. Time axis 104 is for edge node EN1. Time axis 106 is for edge node EN2. Same time moments are arranged horizontally.

Starting at time t0 messages 110 are transmitted between the edge nodes EN1 and EN2, for instance as described in VRRP RFC 3768. Therefore, edge nodes EN1 and EN2 compose a virtual router VR, 20 composed of a master node device MD and of several backup node devices BD. The edge node EN1 becomes the master node MD and edge node EN2 becomes the backup node BD.

At time t2 user node RG1 starts session 40 with the help of messages 112 according to the PPPoE. After some PPPoE processing, the node RG1 obtains, among other information, a session identifier SID1 provided by virtual router 20 for session 40 which has, for instance, the value ten (10). From a physical perspective, messages 112 are sent to the MD node of the virtual router VR, 20, i.e., edge node EN1, see messages 113.

After this, at time t3 a message 114 is sent from edge node EN1 to edge node EN2. Message 114 is the same message as message 50. Therefore message 114 is for the synchronization 42 of the session state between the edge nodes EN1 and EN2. The message 114 is transmitted periodically. In other words, edge node EN2 becomes sufficient information from edge node EN1 to be able to become aware of the sessions that were established with edge node EN1. This means that edge node EN2 also gets the user node MAC addresses corresponding to the session identifiers.

It is supposed that the edge node EN1 fails at time t4 after sending message 114. The virtual domain 20 elects a new master node MD, namely edge node EN2 according to VRRP or a comparable protocol, at time t5.

Messages 117 are still transmitted between user node RG1 and the virtual router 20. Physically messages 117 are transmitted to and from edge node device EN2, see messages 118.

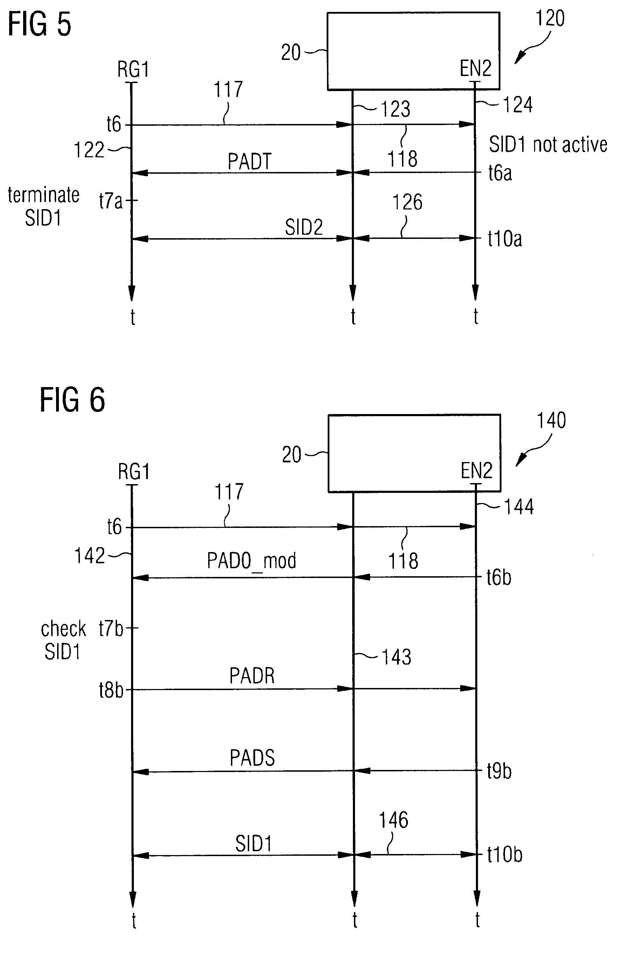

It is possible, for instance, for either user node RG1 or edge node EN2 to terminate session 40 with session identifier SID1 in a predetermined way and very fast with the help of messages 117, 118. A new session with a different session identifier can then be reopened. This will be described with relation to Figure 5 in detail.

However, it is not possible to continue using session 40 with session identifier SID1 by simply using messages 117, 118. In order for the session to be available also by means of EN2, several steps are necessary. Figures 5 and 6 illustrate two alternative methods to reactivate the session previously supported by EN1 in EN2.

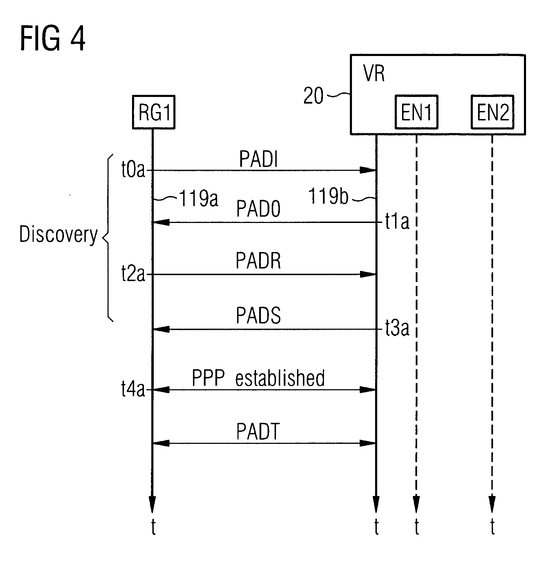

Figure 4 illustrates a scenario of the PPPoE message flow required to establish a PPP session between an user node RG1 and an edge node EN1 according an embodiment that does not use the invention but which makes the explanation of embodiments of the invention easier. The message flow will be described with reference to two time axis 119a and 119b. Time axis 119a is for user node RG1. Time axis 119b is for virtual router VR, 20, i.e. for edge node EN1 at the beginning. Same time moments are arranged horizontally.

At time instant t0a user node RG1 broadcasts a PADI (PPPoE Active Discovery Initiation) request to find a suitable PPPoE server. For the current example, at time t1a user node RG1 receives an answer in the form of a PADO (PPPoE Active Discovery Offer) sent by edge node EN1 which contains the MAC address MAC X of the virtual domain 20.

At time t2a user node RG1 then sends a PADR (PPPoE Active Discovery Request) message destined to the MAC address MAC of the virtual domain 20.

At time t3a edge node EN1 - currently the active node in the virtual domain - replies with a PADS (PPPoE Active Discovery Session confirm) confirming that a session can be established and containing a new session identifier SID1 to be used by user node RG1. This message exchange corresponds to the discovery phase of PPPoE.

At time instant t4a both user node RG1 and edge node EN1 are aware of the session identifier and so user node RG1 can activate a PPP session identified by SID1. Optionally, a PADT (PPPoE Active Discovery Terminate) message may be sent at time t5a either by user node RG1 or by edge node EN1 to terminate session SID1. However, normally it is up to specific PPP mechanisms to terminate the PPPoE session. No messages are transmitted between edge node EN1 and EN2 with regard to PPPoE sessions in the prior art. Furthermore no messages with regard to PPPoE are transmitted between user node RG1 and edge node EN2 in the prior art scenario.

Figure 5 illustrates a first scenario of a message flow 120 to and from the newly elected MD edge node EN2, in order to enable PPPoE connectivity. The message flow 120 will be described with reference to three time axis 122, 123 and 124. Time axis 122 is for user node RG1. Time axis 123 is for virtual router 20. Time axis 124 is for edge node EN2. Same time moments are arranged horizontally.

At time t6, EN2 receives a message 117, 118 sent by user node RG1 and destined to the virtual router 20 and related to session SID1 for which edge node EN2 has some state data, namely for instance session ID SID1, client MAC address and some service tag corresponding to the type of service that the connection belongs to, but which is not active in EN2. Therefore, at time t6a a PADT message according to PPPoE is sent from edge node EN2 to user node RG1 asking user node RG1 to terminate session 40. The message PADT contains the session identifier SID1 that is known to edge node EN2 from message 50, 114, the EN2 identifier, and the service type of the session. User node RG1 receives message PADT and terminates session 40 at time t7a. At time t7b, user node RG1 then again tries to open a new session according to the regular PPPoE process illustrated in Figure 4. The new session with session identifier SID2 is then established according to PPPoE.

Figure 6 illustrates the second scenario to re-establish the session identified by SID1 in edge node EN2. The message flow 140 will be described with reference to three time axis 142, 143 and 144. Time axis 142 is for user node RG1. Time axis 143 is for virtual router 20. Time axis 144 is for edge node EN2. Same time moments are again at horizontally.

At time t6, EN2 receives a message 117, 118 sent by user node RG1 and destined to virtual router 20 and related to session SID1 for which edge node EN2 has some state, but which is not active in edge node EN2. Therefore, at time t6b the edge node EN2 sends a modified PADO_mod message according to PPPoE. The message is modified with regard to the session identifier field. The session identifier has the value of session identifier SID1 that is known to edge node EN2 from message 50, 114. Furthermore, the message PADO mod contains in the source field the MAC address X of domain 40.

At time t7b user node RG1 checks the session identifier SID1 against its current list of sessions. If user node RG1 finds a session SID1 in its memory, then it compares for instance an access concentrator name received in the PADO_mod message against a access concentrator identifier or tag stored for the session SID1 earlier. The access concentrator is termination function of the PPPoE on the network side. This function may be performed by the edge node EN1, EN2 etc. or alternatively by an edge router ER1 to ER3. In the example both edge nodes EN1 and EN2 have the same access concentrator identifier, for instance "server1". The identifier may, for instance, be a text string or a number. This step may prevent a malicious user to fake the behavior of a valid PPPoE server.

Alternatively or additionally to the server tag user node RG1 may compare the MAC address X provided in the message PADO_mod as the identifier of the valid PPPoE server against the current state of session SID1, i.e. against the stored MAC address for this session. This step may prevent further a malicious user to fake the behavior of a valid PPPoE server. If all the information provided on the PADO_mod can be confirmed then RG1 sends a PADR message at time t8b followed by the remainder PPPoE messages to re-establish SID1 as illustrated in Figure 1.

It may happen that user node RG1 cannot find state information concerning to the session identified by SID1 e.g., because the session expired in the meantime, or that the MAC address kept in association to the session identifier SID1 does not correspond to the MAC X sent in the PADO_mod. In such cases, user node RG1 simply ignores the PADO_mod sent by edge node EN2.

If both checks confirm that there are no changes, user node RG1 sends a PADR message at time t8b. The format and contents of message PADR correspond to PPPoE. At time t9b, edge node EN2 responds with a PADS message according to PPPoE to re-establish session 40 with session identifier SID1. Further data or messages are then transmitted before closing session 40 for instance triggered by user node RG1.

Figure 7 illustrates a new VRRP_PPPoE message 150 that is based on the VRRP message format. Message 150 may be used instead of message 50 or 114. Message 150 contains:
- a data field 152 that indicates the version of VRRP, for instance with the value one (1), it is four bits long in the example,
- a data field 154 that indicates the type of the message 150, for instance a new type is defined with value two (2), length is four bits in the example,
- a data field 156 that transports the virtual router VR, 20 identifier, for instance VID1, it is eight bits long in the example,
- an unused data field 158, it is eight bits long in the example,
- a data field 160 that gives the number of session record fields in a data field 168, it is eight bits long in the example,
- a reserved data field 162, it is four bits long in the example,
- a further unused data field 164, it is twelve bits long in the example,
- a checksum data field 166 that contains a checksum over the data of data field 168 and other data fields that should be included according to VRRP, it is sixteen bits long in the example, and
- the data field 168 that transports at least one session record field. The format of a record field is described with reference to Figure 8 below.

In message 150 the length of the fields 152 to 168, the order of the fields 152 to 168 and/or the kind of fields 152 to 168 may be modified in other examples. There may be more or less fields 152 to 168 compared with Figure 6.

Figure 8 illustrates a new PPPoE session record field 180 of the new VRRP_PPPoE message 150. Message 180 contains:
- a data field 182 that carries the PPPoE session identifier, for instance SID1, it is sixteen bits long in the example,
- a data field 184 for TAG_TYPE service name (0x0101 Service Name) according to VRRP, it is sixteen bits long in the example,
- a data field 186 for indicating the length TAG_LENGTH of the following tag; data field 186 is sixteen bits long in the example,
- a data field 190 for the value TAG-VALUE, for instance "VoIP", it has a TAG_LENGTH size in the example, and
- a data field 192 for indicating the MAC address of the user node corresponding to the transmitted session ID, e.g., MAC address of RG1, it is 48 bits long in the example.

In record field 180 the length of the fields 182 to 192, the order of the fields 182 to 192 and/or the kind of fields 182 to 192 itself may be modified in other examples. There may be more or less fields 182 to 192 compared with Figure 8.

In other words, a solution for PPP (Point to Point Protocol, RFC 1661 (Request For Comment)) state synchronization in edge node redundancy scenarios may be given. The solution may be based on virtual router redundancy protocol (VRRP, RFC 3768 and draft-ietf-vrrp-ipv6-spec-07.txt by R. Hinden) or comparable protocols, see for instance the hot standby router protocol (HSRP, RFC 2281) or the common address redundancy protocol (CARP). Especially PPP equipment may use the embodiments of the invention, for instance BRAS equipment (Broadband Remote Access Server).

The set of IP (Internet Protocol) protocols are today used to provide connectivity between heterogeneous network equipment. Connectivity here means getting an IP address and a default IP gateway, as well as being able to route IP information across a variety of networks. IP allows, for instance, the access of end-users to the several services provided on the Internet.

The several elements that are required to set up IP connectivity (IP address, default gateway, DNS server, etc) are normally provided by different methods which strongly depend upon different business wholesale models, e.g., Ethernet or IP wholesale models. A way today to obtain such elements is the PPP protocol. A typical architecture for a PPP-based scenario is the architecture illustrated in Figure 1, where end user equipment is interconnected by means of a residential gateway (RG) to the access network owned by the network access operator (NAP).

In such an architecture, the Edge Node (EN) which is typically a Broadband Remote Access Server (BRAS) deals with a variety of complex functions, among them PPP termination and IP connectivity assignment, thus being a single point of failure. As of today and in order to provide more network stability, operators normally rely on two physically different BRAS elements to provide the same functionality, i.e., to every main BRAS element there is a redundant BRAS which takes over the functions of the main one whenever necessary. This is referred to as EN redundancy. The term *redundancy* is applied in this scenario to mean that services supported by the NAP/SPs can be seamlessly diverted from a primary to one or several secondary ENs.

While there are as of today redundancy solutions for IP connectivity, e.g., VRRP, such solutions do not take into consideration the need to synchronize between the different redundant edge nodes ENs PPP state information.

To provide an example, please refer to Figure 1. It is assumed again that if EN1 goes down, EN2 automatically takes over the IP functions of EN1. This is possible because a current state-of-the-art solution, VRRP, provides a means to identify both EN1 and EN2 by means of a virtual IP address Y and a virtual MAC address X. Physically, both the MAC X and the IP Y are linked to a specific EN element. When EN1 goes down, then EN2 takes over and therefore MAC X and IP Y are physically associated to a network interface of EN2.

While this ensures that the virtual IP Y and virtual MAC X are still associated with a physical entity, VRRP has, as of today, no way to ensure PPP state synchronization. Consequently, when EN1 goes down, the PPP sessions that were previously established (while MAC X and IP Y were physically associated to EN1) seem, for the respective PPP clients, to be active, while in fact it is not. This may end up in visible disruption from the client side, given that PPP state is kept by PPP keepalives sent by the PPPoE client: PPPoE relies on PPP keepalives (sent every 30s by default) to detect link or peer node failures. If PPP detects a failure, it terminates the PPPoE session. If the PPP keepalive mechanism is disabled on a CPE node, the CPE node has no way to detect link or peer node failures over PPPoE connections.

The contribution of an embodiment of the invention is to provide a solution for PPP state synchronization. In case of a primary node failure the backup node(s) is automatically capable of handling the PPP sessions that were alive on the primary node.

The normal way to provide IP redundancy is to configure the respective ENs, see for example EN1 and EN2 in Figure 1, into a specific "virtual" local area network covering all the elements between PPP client and ENs. EN1 and EN2 may run the VRRP being configured in a single VRRP domain which is defined by the IP address Y (for instance a virtual IP address) and the virtual MAC address X. PPP session 1 has been established based upon the VRRP virtual addresses (virtual IP Y and virtual MAC X). Given that the NAP (Network Access Provider) aggregation technology of choice is Ethernet the PPP session is established by means of PPP over Ethernet (PPPoE, RFC 2516). Alternatively, other technologies and appropriate PPP protocols may be used, for instance ATM (Asynchronous Transfer Mode).

In the example, for redundancy purposes, both EN1 and EN2 are incorporated into a Virtual Local Area Network (VLAN) which also incorporates the related ANs, and both EN1 and EN2 are configured in a way that they support the same PPPoE service tags, so that they can answer the same PPPoE requests.
For illustration purposes, we assume that PPP session 1 has been established based upon the VRRP virtual addresses (virtual IP Y and virtual MAC X). Given that the aggregation technology of choice is Ethernet, the PPP session is established by means of PPP over Ethernet (PPPoE). This is performed in two different phases, as illustrated in Figure 4. PPPoE holds a *Discovery* and a *PPP Session* stage. When a client wants to establish a PPPoE session, then Discovery is performed to find out the MAC address of the server *(Access Concentrator, AC),* for instance a BRAS, and to establish a PPPoE SESSION_ID. If this phase is successful (the PPPoE client obtains the required information), then both the client and the AC have information to set the PPP connection over Ethernet. It should be noticed that there is no state, i.e. stored data of the session, kept during the Discovery stage.

This only happens during the PPP session stage, when both the client and the AC allocate resources for a PPP virtual interface. Once the PPPoE session is established, PPP data is sent (encapsulated) .

For the generic scenario illustrated in Figure 1, user node RG1 therefore represents the PPPoE client, while edge nodes EN1 and EN2 hold the AC functionality. The user node RG emits a PPPoE request (broadcast) to all the suitable PPPoE servers. This broadcast (PADI) is performed on the VLAN covering EN1 and EN2 and given that both the ENs are within the same VRRP domain, EN1 (the primary) replies with a PADO message which contains the virtual MAC X, and a session identifier *(session ID).* The RG then sends a unicast request to setup the PPPoE session (PADR). When edge node EN1 gets this message, it replies with a session confirmation (PADS), including the generated session ID. PPP is then activated. This implies that on the user node RG side, PPP is activated on the respective WAN (Wide Area Network) interface (associated to a WAN IP address) while on the EN side, PPP is associated to the virtual IP Y. However, only EN1 keeps state concerning this PPP session - EN2 is only used, e.g., if EN1 goes down.

In the case that edge node EN1 goes down, edge node EN2 is elected as primary node by means of VRRP. While this ensures that the virtual IP Y and the virtual MAC X are still associated with a physical entity (a network interface from EN2), VRRP has, without the proposed solution, no possibility to ensure PPP state synchronization. Consequently, when EN1 goes down, the PPP session seems for the PPP client to be alive while in fact it is not. With the regular PPP either the session is "half alive" (the PPP client does not have PPP keepalives activated) or it takes, for instance, 30 seconds for the session to time out and for the client to request a new PPP session if the client has PPP keepalives activated.

The proposed embodiment uses a new message capable of providing PPPoE state information to the different PPPoE servers associated to a specific router redundancy domain. The regular VRRP message, contains for instance the type field (4 bits) which in the current version (VRRP version 2 for IPv4 and version 3 for IPv6) is simply defined as one (1) (Advertisement). The type field is however extensible and the VRRP may be extended to provide advertisements concerning active PPP sessions. Such advertisements may rely on a new message which may be named VRRP_PPPoE message and has a type field with a new defined value, for instance value two (2). The VRRP_PPPoE message may be the same message as described with regard to Figure 7. The VRRP_PPPoE message may follow the regular VRRP message format and may hold an additional field (for instance of variable length) which contains several records for the PPPoE sessions that are active at the moment. Consequently a single message is used to carry state data and/or session data concerning several PPP sessions. Alternatively each message may contain only information related to one active session.

The format for each PPP session information record may be as illustrated in Figure 8. The primary router sends:
- the session identifier SESSION_ID (for instance two bytes),
- the tag that identifies the service which the PPPoE client is accessing (for instance two bytes, TAG_TYPE Service name),
- and the client Ethernet MAC address associated to a specific PPPoE session,
for each active PPP session. The VRRP_PPPoE message is sent from the master to the backup router(s) periodically, similar to the regular VRRP messages. Alternatively, it is possible to use other transmission schemes. In the example, EN1 sends such a message periodically which provides EN2 with sufficient information to speed up the PPP synchronization process, in the case that EN1 fails - without having to deal with a full duplication of the PPP state, which is of course possible in an alternative embodiment.

If EN1 goes down, EN2 is elected as master by means of VRRP. EN2 holds enough information in terms of the PPPoE Discovery Process, but no or little information concerning the PPPoE session process. There are then at least the following two possibilities:

The AC or EN may send a PPPoE active discovery terminate (PADT) message requesting the respective client to terminate the PPPoE session that is only half alive. This message, contains at least the adequate service name (TAG_TYPE Service-Name) and the AC tag. The session ID is also in this PADT message. The client then terminates the respective PPPoE session and tries to establish a new session based upon the suggested tags and starting with a PADR as illustrated in Figure 4- there is no need to repeat the full PPPoE discovery process. This requires only a slight change on both the PPPoE client and AC implementation, related to the way the messages are interpreted.

Alternatively, the AC may send a PPPoE active discovery Offer (PADO) message with session identifier SESSION_ID. Usually, the PADO messages carry a blank SESSION_ID field. Because the PADO carries a non-blank session ID, the client checks such a SESSION_ID against its PPPoE session state and also confirms an access concentrator identifier or tag for the respective session. This step prevents possible security implications, e.g., an attempt of malicious user. If the data associated to the sent SESSION_ID is not found or is not completely confirmed, then the client ignores, i.e. discards, the received PADO. If it finds the respective session, then it replies with a PPPoE active discovery request (PADR) message. The AC confirms the session establishment. The PPP session is then re-established, given that both the client and the AC have enough information to transmit PPP data. This option does not require as many messages as the first option.

One advantage of the proposed solution is the possibility to achieve PPP state synchronization in EN redundancy scenarios instead of the disruption of delay sensitive services.

Another advantage of the proposed solution is the ability to speed up the recovery process. The proposed mechanism provides the PPPoE client and also the server with a way to react quickly to a failure, especially without having to wait for the termination of the PPPoE configured keepalive periods.

Also RFCs that are based on the cited RFCs are of course relevant, especially further developments of these RFCs.

### List of reference signs

VRID virtual router ID
IPA, IPB internet address
MD master node
BD backup node
10 network segment
11 access network
14 node
16 user node
RG1 to RG3 user node
AN1 access node
AN2 access node
NAP network access provider
EN1, EN2 edge node
ER1 to ER3 edge router node
20 VRRP domain
NSP1 to NSP3 network service provider network
ASP application service provider
30 local area network
32 to 36 xDSL line
40, 40a PPP session
40, 40b PPP session
42 PPP state synchronization
50 message
52 virtual router ID field
54 optional field
56 session ID field
58 optional field
60 MAC address field
62 session related data
100 message flow diagram
t time
102 to 106 time axis
t0 to t10b time
110 to 114 message
116 failure
117, 118 message
119a, 119b time axis
120 message flow diagram
122, 124 time axis
PADT terminate message
126 message
140 message flow diagram
142, 144 time axis
PADO, PADR message
PADS message
150 message
152 to 168 data field
180 record field
182 to 192 data field

## Claims

1. Method for enabling network node (EN1, EN2) redundancy in an access network (11), comprising:
creating a first connection (40, 40a) between a first node (EN1) and a second node (RG1),
between the first node and a third node (EN2) synchronize connection data that identifies the first connection (40, 40a).

2. Method according to claim 1, **characterized by**:
in the third node (EN2) storing the connection data.

3. Method according to claim 1 or 2 **characterized by**:
enabling the second node (RG1) to quickly react after the failure and create a second connection (40, 40b) between the second node (RG1) and the third node (EN2).

4. Method according to claim 3 **characterized in that** the second connection (40, 40b) has the same connection identifier (Session_ID) as the first connection (40, 40a).

5. Method according to claim 1 or 2 **characterized by**:
using the stored connection data to notify the second node (RG1) that the first connection (40, 40a) has been interrupted because of the failure.

6. Method according to claim 5 **characterized by**:
creating a second connection (40, 40b) between the second node (RG1) and the third node (EN2) after the failure.

7. Method according to one of the preceding claims **characterized by**:
transferring the connection data from the first node (EN1) to the third node (EN2).

8. Method according to one of the preceding claims, **characterized in that** the connection data is a second connection data that is a copy of a first connection data that is stored in the first node (EN1).

9. Method according to claim 8, **characterized by**:
copying the first connection data more than once.

10. Method according to claim 9, **characterized by**:
copying the first connection data periodically for transfer to the third node .

11. Method according to one of the preceding claims, **characterized in that** the access is enabled precautionary.

12. Method according to one of the preceding claims, **characterized in that** the first connection (40, 40a) uses an unchanged interface that can be used also by the third node (EN2) .

13. Method according to one of the preceding claims, **characterized by** at least on of:
the data identifying the first connection (40, 40a) is a connection identifier (SESSION_ID),
the connection is established using the PPPoE or PPPoA.

14. Method according to one of the preceding claims, **characterized by**:
using a first message (50, 150) to transfer the data from the first node (EN1) to the third node (EN2).

15. Method according to claim 14, wherein the first message (150) comprises data fields (168, 180) identifying more than one connection or more than 1000 connections.

16. Method according to one of the preceding claims, wherein the third node (EN2) receives a second message (110),
the second message (110) comprising:
a second identifier (VRID) identifying a unit that is used as an unchanged interface for the second node (RG1) if the first node (EN1) has been failed.

17. Method according to claim 16, **characterized in that** the second message (110) confirms to the virtual router redundancy protocol to the hot standby router protocol to the common address redundancy protocol or another protocol for router redundancy.

18. Method according to one of the claims 14 to 15 and to one of the claims 16 to 17, **characterized in that** the first message (50, 150) comprises a data field (52, 156) for the second identifier (VRID).

19. Method according to one of the preceding claims, wherein the third node (EN2) is able to use or uses the data identifying the connection in a third message (118, PADT, PADO_mod) that it sends to the second node (RG1).

20. Method according to claim 19, wherein the third message (118) is a message (PADT) that terminates the connection.

21. Method according to claim 20, wherein the third message (118) is a PADT message (PADT) according the PPPoE.

22. Method according to claim 19, wherein the third message (118) is a PADO message (PADO) according to the PPPoE with a modification in that the session ID of the session is transmitted in the session ID field.

23. Method according to claim 22, wherein the second node (RG1) checks the connection identifier transmitted in the third message (118, PADO).

24. Method according to claim 22 or 23 wherein the second node (RG1) checks data transmitted in the third message (118, PADO), especially an access concentrator identifier.

25. Message (50, 150), comprising:
a data field (56, 168) identifying at least one connection between a second node (RG1) and a first node (EN1) of an access network (11),
a data field (52, 156) comprising a virtual identifier identifying both an interface of the first node (EN1) and of a third node (EN2) and that can be used to represent the third node (EN2) if the first node (EN1) cannot support the connection anymore.

26. Message (50, 150) according to claim 25, wherein the data field (56, 168) identifying at least one connection comprises at least one of or all:
a connection identifier (56),
a service name (184),
a node identifier (60, 192).

27. PPPoE active discovery terminate PADT message (PADT), wherein the session ID is different from zero.

28. Node device (EN1, EN2),
comprising a processing unit that processes a message (50, 150) comprising at least one of or both:
a data field (56, 168) identifying at least one connection between a second node (RG1) and a first node (EN1) of an access network (11),
a data field (52, 156) comprising a virtual identifier identifying both an interface of the first node (EN1) and of a third node (EN2) and that can be used to represent the third node (EN2) if the first node (EN1) cannot support the connection anymore,
and comprising a sending unit that sends the message (50, 150) to a further node (EN2, EN1) of the access network (11) or comprising a receiving unit that receives the message (50, 150) from a further node (EN) of the access network (11).

29. User node device (RG1, RG2) that processes a PPPoE active discovery terminate PADT message (PADT), wherein the session ID is different from zero by checking the session ID against a session ID of a current PPPoE session.

30. User node device (RG1, RG2) according to claim 29 wherein the user node (RG1) checks a source address, especially a virtual source address.
